# EUROPEAN PATENT SPECIFICATION

(11) **EP 1 104 717 B1**
(45) Date of publication and mention of the grant of the patent: **22.10.2003**
(21) Application number: 00310668.9
(22) Date of filing: 01.12.2000
(51) Int. Cl.: B60N 2/28

(54) **Child safety seat**
Kindersicherheitssitz
Siège de sécurité pour enfants

(30) Priority: 04.12.1999 GB 9928628
(43) Date of publication of application: 06.06.2001
(73) Proprietor: Britax-Excelsior Limited, Warwick CV34 6DE (GB)
(72) Inventor: Carine, David Sean, Andover, Hampshire SP11 6DF (GB); Beaumont, Andrew Patrick, Basingstoke, Hampshire RG22 4YJ (GB)
(74) Representative: Hollinghurst, Antony

(56) References cited:
- EP-A- 0 609 889
- EP-A- 0 640 508
- EP-A- 0 921 030
- EP-A- 0 949 113
- FR-A- 2 777 517
- US-A- 4 613 188
- US-A- 4 913 490

## Description

This invention relates to a child safety seat of the type secured on a vehicle seat by a vehicle seat belt and having a bottom zone adapted to rest on the vehicle seat cushion and guide surfaces for engagement by the vehicle seat belt for holding the child seat in place on the vehicle seat.

In the event of sudden deceleration (for example during an accident), such a seat tends to rotate about the lap strap of the vehicle seat belt, pushing the front part of the vehicle seat cushion downwards until the latter is fully compressed. This rotation allows the upper part of the child seat (and therefore the head of a child occupying the child seat) to move forwards. It is an object of the invention to minimise such forward movement.

The term "fully compressed" is used herein to mean that the seat cushion has been compressed to such an extent that the resistance to any further downward force is substantially greater than that which has caused such full compression. For example, the resilient material of the seat cushion may have become fully compacted between the bottom of the child seat and an underlying vehicle seat pan.

The amount of such rotation of the child seat can be reduced by precompressing the vehicle seat cushion. Mere tightening of the vehicle seat belt to achieve such precompression requires application of substantial force which users are unlikely to apply. For this reason safety standards require child seats to operate satisfactorily with the tension in the vehicle seat belt within a specified range during installation (50 Newtons to 75 Newtons in European Regulation ECE R44.03).

EP-A-0921030 discloses a child seat of the type described above having a downwardly movable front foot which is operable to compress the vehicle seat cushion after the child seat has been installed. This requires the user to perform an additional operation which may be forgotten. US-A-4 613 188 also discloses a similar child seat.

According to the invention, a child safety seat of the type described above has at least one static rigid protuberance projecting downwardly below the bottom zone at an intermediate location located between one quarter and half way back from the front edge of the bottom zone, the area of said at least one protuberance in contact with the vehicle seat being less than 10% of the area bounded by the perimeter of said bottom zone.

As the vehicle seat belt is tightened during installation of the child seat, all the force exerted on the vehicle seat cushion is concentrated in the area under the protuberance. Only when the protuberance is fully embedded does the surrounding region of the vehicle seat cushion start to be compressed. This pre-compression of the area of the vehicle seat cushion under the protuberance reduces the extent of further downward movement which can take place before this area is fully compressed, with the result that further downward movement is not possible. This reduces forward movement of the upper part of the child seat during an accident.

The distance of the protuberance from the front of the bottom zone is critical in ensuring both full physical contact and correct timing of contact during an accident. If the protuberance is too far forwards, there is a risk that it will fall off the front edge of the vehicle seat cushion, creating slack in the vehicle seat belt condition and resulting in excessive forward movement of the child seat. If the protuberance is too far back, the child seat tends to tip forwards and the protuberance fails to contact the vehicle seat structure.

Preferably, the protuberance which may be hemispherical, is about one third of the way back from the front edge.

In order to avoid the risk of the seat pivoting laterally about a single protuberance in the event of an oblique impact on the vehicle, a pair of protuberances may be provided on the bottom zone of the child seat, one on each side of the seat at equal distances from the front edge, the combined area of all the protuberances in contact with the vehicle seat being less than 10% of the area bounded by the perimeter of said bottom zone.

Preferably the combined area of all the protuberances in contact with the vehicle seat is between 3% and 4% of the area bounded by the perimeter of said bottom zone. The minimum area of each protuberance is chosen to be such as not to cause damage to the vehicle seat cover.

The invention is equally applicable to child seats of the type having a bottom zone in the form of a flat panel and to child seats of the type having a bottom zone in the form of an open frame.

Embodiments of the invention will now be described, by way of example, with reference to the accompanying drawings, in which:
Figure 1 is a perspective view of a first child seat in accordance with the invention;
Figure 2 is a perspective view from a different angle of the seat shown in Figure 1;
Figure 3 is a front view of the child seat shown in Figures 1 and 2, positioned on the vehicle seat before the vehicle seat belt has been tightened; and
Figure 4 is a front view, similar to Figure 3, but with the vehicle seat belt tightened; and
Figure 5 is a perspective view of a second child seat in accordance with the invention.

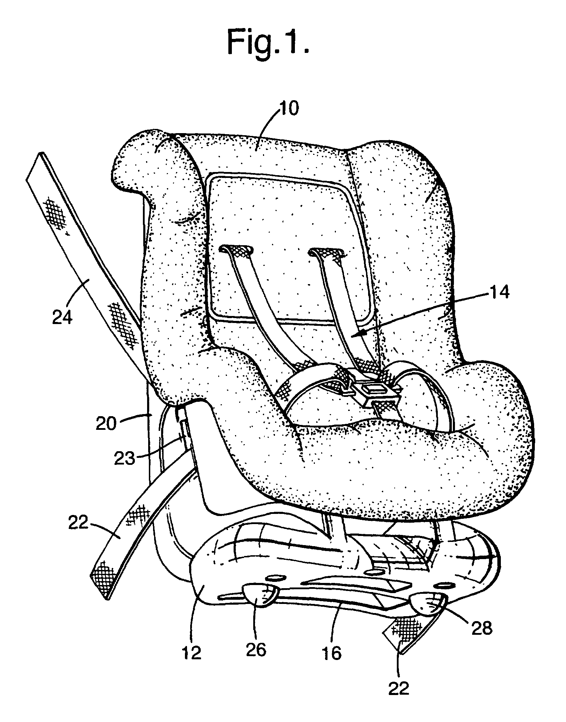

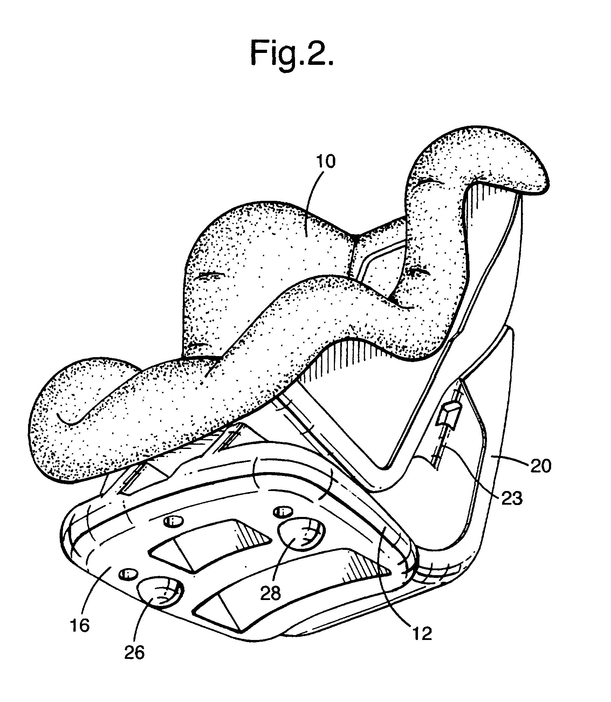

Referring to Figures 1 and 2, a child safety seat comprises a seat body 10 mounted on a base 12. A conventional five-point harness 14 is provided for securing a child in the seat body 10.

The base 12 has a bottom surface 16 adapted to rest on a vehicle seat cushion 18 and a back portion 20 adapted to abut against the vehicle seat back (not shown). The child safety seat is held in place on the vehicle seat by emgagement of the lap strap 22 of a three-point vehicle seat belt with guide surfaces 23. The child seat is provided with a lock-off device not shown, for example as described in EP-A-0200411, to prevent webbing from the shoulder strap 24 of the seat belt from feeding through to slacken the lap strap 22.

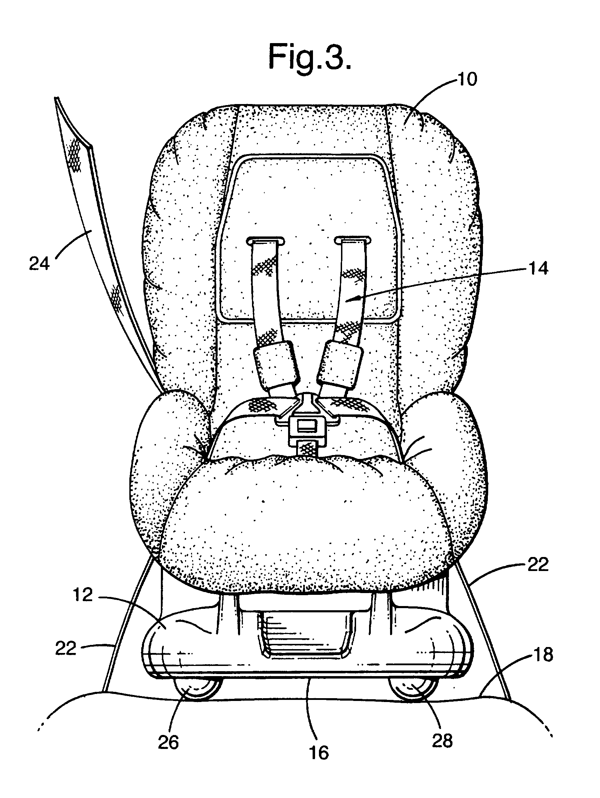

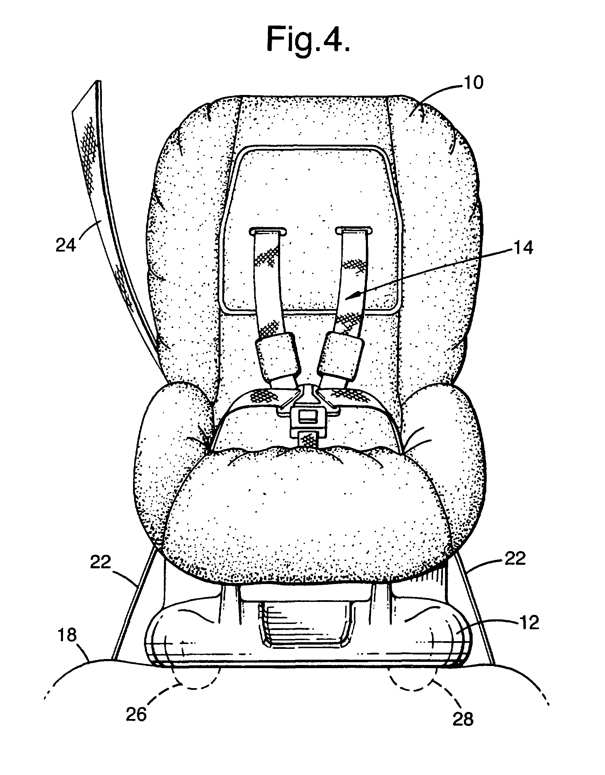

The base 12 has two hemispherical protuberances 26 and 28 which are located about one third of the way back from its front edge and which rest on the vehicle seat cushion 18. When the seat belt is first fastened, the protuberances 26 and 28 hold the bottom surface clear of the vehicle seat cushion as shown in Figure 3. Tightening the lap strap 22 of the seat belt presses the protuberances 26 and 28 into the vehicle seat cushion 18 so that the latter is engaged by the surrounding bottom surface 16 of the base 12. The zones of the seat cushion 18 under the protuberances 26 and 28 are compressed between such protuberances and a hard support structure 30 (Figures 3 and 4) on which the seat cushion 18 rests. Depression of the two protuberances 26 and 28 into the vehicle seat cushion 18 does not alter the orientation of the child seat relative to the vehicle or increase the tension in the lap strap 22 beyond the range specified in safety regulations (50 Newtons to 75 Newtons in European Regulation ECE R44.03).

After correct installation, the protuberances 26 and 28 are no longer visible because they are embedded in the vehicle seat cushion, thus providing a visual indication that the vehicle seat belt has been tightened sufficiently. Preferably, the protuberances 26 and 28 are of a colour which contrasts with that of the rest of the base 12 so as to enhance their visibility prior to tightening the vehicle seat belt.

During the deceleration experienced in an accident, the protuberances 26 and 28 move downwards through the vehicle seat cushion and contact the hard support structure 30 much earlier than bottom surface 16 of the child seat base 12 would otherwise have done. This contact then stops the downward rotation of the child seat and allows the seat belt tension to act at an earlier time during the loading process, resulting in reduced forward excursion of the child's head and reduced acceleration of the child's chest.

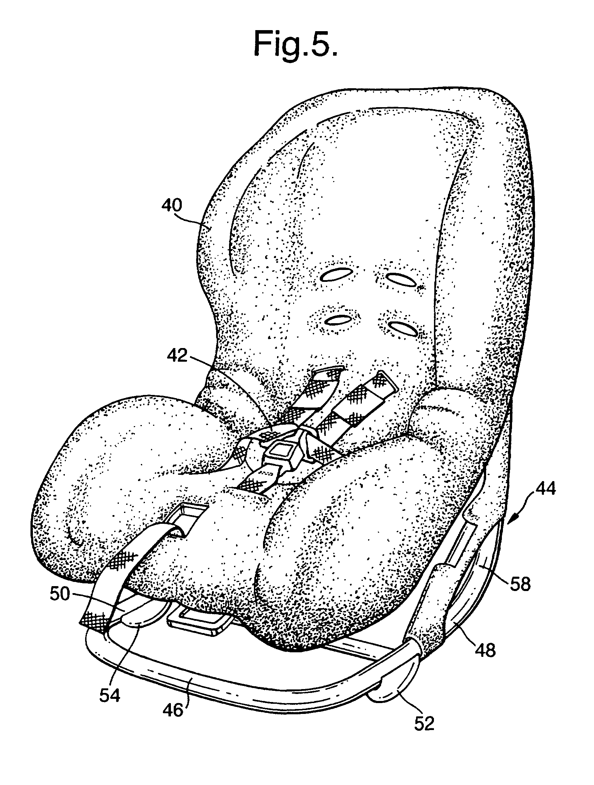

Figure 5 shows another child seat in accordance with the invention having a seat body 40 similar to the seat body 10 of Figures 1 to 4, having a five-point harness 42. However the seat body 40 is mounted on a base which comprises a frame 44 formed of tubular material and including a U-shaped horizontal portion 46 which is adapted to rest on a vehicle seat and which has side limbs 48 and 50 intended to extend in the longitudinal direction of the vehicle. Each of the side limbs 48 and 50 carries a respective downwardly extending protuberance 52, 54 located about one third of the way back from its front end. The protuberances 52 and 54 function in the same manner as the protuberances 26 and 28 of Figures 1 to 4. Each side limb 48, 50 also has a respective guide member 58 for engagement by a vehicle lap belt (not shown in Figure 5).

In either embodiment of the invention, the protuberances 26, 28, 52 may be surrounded by a layer of compressible material. In the embodiment of Figures 1 to 4, such a layer may extend over the entire bottom surface 16 so that the protuberances constitute hidden hard points in a soft base.

## Claims

1. A child safety seat adapted to be secured on a vehicle seat by a vehicle seat belt (22, 24), the child safety seat having a bottom zone (16, 46) adapted to rest on the vehicle seat cushion and guide surfaces (23, 58) for engagement by the vehicle seat belt (22, 24) for holding the child seat in place on the vehicle seat, **characterised in that** at least one static rigid protuberance (26, 28, 52, 54) projects downwardly below the bottom zone (16, 46) at an intermediate location between one quarter and half way back from the front edge of the bottom zone (16, 46), the area of said at least one protuberance (26, 28, 52, 54) in contact with the vehicle seat being less than 10% of the area bounded by the perimeter of said bottom zone (16, 46).

2. A child safety seat according to claim 1, wherein the protuberance (26, 28, 52, 54) is hemispherical.

3. A child safety seat according to claim 1 or 2, wherein the protuberance (26, 28, 52, 54) is about one third of the way back from the front edge.

4. A child safety seat according to claim 1, 2 or 3, having a pair of protuberances (26, 28, 52, 54) on respective sides of its bottom zone (16, 46) at equal distances from the front edge, the combined area of all the protuberances (26, 28, 52, 54) in contact with the vehicle seat being less than 10% of the area bounded by the perimeter of said bottom zone (16, 46).

5. A child safety seat according to any preceding claim, wherein the combined area of all the protuberances (26, 28, 52, 54) in contact with the vehicle seat is between 3% and 4% of the area bounded by the perimeter of said bottom zone (16, 46).

6. A child safety seat according to any preceding claim, wherein the bottom zone (16, 46) comprises a flat panel.

7. A child safety seat according to any of claims 1 to 6, wherein the bottom zone (16, 46) comprises an open frame.

8. A child safety seat according to any preceding claim, wherein the protuberance (26, 28, 52, 54) is positioned at an intermediate location located between on quarter and half way back from the front edge of the bottom zone (16, 46) when the seat is forward facing.

9. A vehicle seat having seat cushion (18) a lap belt (22) and a child safety seat (10, 40) according to any preceding claim, mounted thereon and secured by the lap belt (22).

## Patentansprüche

1. Kindersicherheitssitz, der mit einem Fahrzeugsitzgurt (22, 24) an einem Fahrzeugsitz befestigt werden kann, wobei der Kindersicherheitssitz einen Bodenbereich (16, 46), der auf dem Fahrzeugsitzpolster ruhen kann, und Führungsflächen (23, 58) zur Ineingriffnahme durch den Fahrzeugsitzgurt (22, 24) aufweist, um den Kindersitz auf dem Fahrzeugsitz festzuhalten, **dadurch gekennzeichnet, dass** mindestens ein feststehender, starrer Vorsprung (26, 28, 52, 54) an einer Zwischenstelle zwischen einem Viertel und der Hälfte des Weges von der Vorderkante des Bodenbereichs (16, 46) zurückversetzt unterhalb des Bodenbereichs (16, 46) nach unten vorsteht, wobei der Bereich des mindestens einen Vorsprungs (26, 28, 52, 54) in Kontakt mit dem Fahrzeugsitz weniger als 10% des Bereichs beträgt, der von dem Umfang des Bodenbereichs (16, 46) begrenzt wird.

2. Kindersicherheitssitz nach Anspruch 1, bei dem der Vorsprung (26, 28, 52, 54) halbkugelförmig ist.

3. Kindersicherheitssitz nach Anspruch 1 oder 2, bei dem der Vorsprung (26, 28, 52, 54) um etwa ein Drittel des Weges von der Vorderkante zurückversetzt ist.

4. Kindersicherheitssitz nach Anspruch 1, 2 oder 3, mit einem Paar Vorsprünge (26, 28, 52, 54) an jeweiligen Seiten seines Bodenbereichs (16, 46) unter Einhaltung gleicher Abstände von der Vorderkante, wobei der kombinierte Bereich aller Vorsprünge (26, 28, 52, 54) in Kontakt mit dem Fahrzeugsitz weniger als 10% des Bereichs beträgt, der von dem Umfang des Bodenbereichs (16, 46) begrenzt wird.

5. Kindersicherheitssitz nach einem der vorhergehenden Ansprüche, bei dem der kombinierte Bereich aller Vorsprünge (26, 28, 52, 54) in Kontakt mit dem Fahrzeugsitz 3% bis 4% des Bereichs beträgt, der vom Umfang des Bodenbereichs (16, 46) begrenzt wird.

6. Kindersicherheitssitz nach einem der vorhergehenden Ansprüche, bei dem der Bodenbereich (16, 46) eine flache Tafel umfasst.

7. Kindersicherheitssitz nach einem der Ansprüche 1 bis 6, bei dem der Bodenbereich (16, 46) einen offenen Rahmen umfasst.

8. Kindersicherheitssitz nach einem der vorhergehenden Ansprüche, bei dem der Vorsprung (26, 28, 52, 54) an einer Zwischenstelle angeordnet ist, und zwar zwischen einem Viertel und der Hälfte des Weges von der Vorderkante des Bodenbereichs (16, 46) zurückversetzt, wenn der Sitz nach vorn weist.

9. Fahrzeugsitz mit einem Sitzpolster (18), einem Bauchgurt (22) und einem Kindersicherheitssitz (10, 40) nach einem der vorhergehenden Ansprüche, der darauf montiert und durch den Bauchgurt (22) befestigt ist.

## Revendications

1. Siège de sécurité pour enfant prévu pour être fixé sur un siège de véhicule par une ceinture de sécurité de véhicule (22, 24), le siège de sécurité d'enfant ayant une zone de fond (16, 46) prévue pour reposer sur le coussin de siège de véhicule et des surfaces de guidage (23, 58) pour engagement par la ceinture de sécurité de véhicule (22, 24) afin de maintenir le siège pour enfant en place sur le siège de véhicule, **caractérisé en ce qu'**au moins une protubérance rigide statique (26, 28, 52, 54) dépasse vers le bas sous la zone de fond (16, 46) au niveau d'un emplacement intermédiaire entre un quart et la moitié vers l'arrière depuis le bord avant de la zone de fond (16, 46), la surface de ladite au moins une protubérance (26, 28, 52, 54) en contact avec le siège de véhicule étant inférieure à 10 % de la surface délimitée par le périmètre de ladite zone de fond (16, 46).

2. Siège de sécurité pour enfant selon la revendication 1, dans lequel la protubérance (26, 28, 52, 54) est hémisphérique.

3. Siège de sécurité pour enfant selon la revendication 1 ou 2, dans laquelle la protubérance (26, 28, 52, 54) est à environ un tiers vers l'arrière depuis le bord avant.

4. Siège de sécurité pour enfant selon la revendication 1, 2 ou 3, ayant une paire de protubérances (26, 28, 52, 54) sur des côtés respectifs de sa zone de fond (16, 46) à des distances égales depuis le bord avant, la surface combinée de toutes les protubérances (26, 28, 52, 54) en contact avec le siège de véhicule étant inférieure à 10 % de la surface délimitée par le périmètre de ladite zone de fond (16, 46).

5. Siège de sécurité pour enfant selon l'une quelconque des revendications précédentes, dans lequel la surface combinée de toutes les protubérances (26, 28, 52, 54) en contact avec le siège de véhicule est entre 3 % et 4 % de la surface délimitée par le périmètre de ladite zone de fond (16, 46).

6. Siège de sécurité pour enfant selon l'une quelconque des revendications précédentes, dans lequel la zone de fond (16, 46) comporte un panneau plat.

7. Siège de sécurité pour enfant selon l'une quelconque des revendications 1 à 6, dans lequel la zone de fond (16, 46) comporte un bâti ouvert.

8. Siège de sécurité pour enfant selon l'une quelconque des revendications précédentes, dans lequel la protubérance (26, 28, 52, 54) est positionnée dans un emplacement intermédiaire situé entre un quart et la moitié vers l'arrière depuis le bord avant de la zone de fond (16, 46) lorsque le siège est orienté vers l'avant.

9. Siège de véhicule ayant un coussin de siège (18), une ceinture ventrale (22) et un siège de sécurité pour enfant (10, 40) selon l'une quelconque des revendications précédentes, montée dessus et fixée par la ceinture ventrale (22).
